Europäisches Patentamt

European Patent Office

Office européen des brevets

(11) Veröffentlichungsnummer: **0 386 417**
**A2**

(12) **EUROPÄISCHE PATENTANMELDUNG**

(21) Anmeldenummer: 90100883.9

(51) Int. Cl.5: **H04Q 7/02, H04B 7/26**

(22) Anmeldetag: 17.01.90

(30) Priorität: 04.03.89 DE 3907091

(43) Veröffentlichungstag der Anmeldung:
**12.09.90 Patentblatt 90/37**

(84) Benannte Vertragsstaaten:
**AT BE CH DE DK ES FR GB GR IT LI LU NL SE**

(71) Anmelder: **ROBERT BOSCH GMBH**
**Postfach 10 60 50**
**D-7000 Stuttgart 10(DE)**

(72) Erfinder: **Dallmann, Horst**
**Wiersichweg 5**
**D-1000 Berlin 13(DE)**

(74) Vertreter: **Schmidt, Hans-Ekhardt, Dipl.-Ing.**
**Robert Bosch GmbH Geschäftsbereich**
**Mobile Kommunikation Patent- und**
**Lizenzabteilung Forckenbeckstrasse 9-13**
**D-1000 Berlin 33(DE)**

(54) **Funknetz mit ortsfesten und mobilen Funkstationen.**

(57)   2.1 Der Erfindung liegt die Aufgabe zugrunde, von einer ortsfesten Funkstation aus eine bestimmte Gruppe von mobilen Funkstationen zu rufen, auch wenn sich die Zusammensetzung der Gruppe im Laufe der Zeit verschiedentlich ändert.

2.2 Die Lösung der Aufgabe besteht darin, daß eine in jeder mobilen Funkstation (11, 12) vorgesehene Mikroprozessorschaltung einen freien Speicherplatz (M3) kontrolliert. Dieser Speicherplatz nimmt eine von der ortsfesten Funkstation (10) ausgesendete, für eine frei wählbare Gruppe von mobilen Funkstationen gemeinsam geltende, nicht quittierungspflichtige Gruppen-Funkrufnummer auf.

2.3 Ein bevorzugtes Anwendungsgebiet für die Erfindung ist ein Sprechfunknetz mit mobilen Funkteilnehmern.

3. Die Zeichnung zeigt ein Blockschaltbild eines Funknetzes mit einer ortsfesten und mehreren mobilen Funkstationen.

EP 0 386 417 A2

## Funknetz mit ortsfesten und mobilen Funkstationen

Die Erfindung geht von einem Funknetz nach dem Oberbegriff des Anspruchs 1 aus.

**Stand der Technik**

Im Gegensatz zu drahtgebundenen Nachrichtennetzen, welche im allgemeinen durch eine Punkt-zu-Punkt-Verbindung gekennzeichnet sind, stellen Funknetze immer eine Punkt-zu-Mehrpunkt-Verbindung dar. Einen Punkt bildet hierbei die verbindungsaufbauende Station, welche aus einer Vielzahl von empfangsbereiten Stationen (Punkten) die gewünschte Station selektieren muß. Dies geschieht entweder durch einen verbalen Anruf oder durch die Aussendung eines die gewünschte Station kennzeichnenden individuellen Selektivrufkodes.

Es ist bekannt, den Selektivrufkode eines mobilen Funkteilnehmers durch entsprechende feste Kodierung eines Kodeträgers, das ist zum Beispiel ein Kodierstecker oder eine Magnetstreifenkarte, festzulegen. Der Kodeträger ist in eine dafür vorgesehene Aufnahmevorrichtung des mobilen Funkgerätes einzustecken und wird von dem Elektronikteil des mobilen Funkgerätes gelesen. Es ist weiterhin bekannt, einem mobilen Funkgerät zwei verschiedene Rufnummern zuzuteilen. Dies ist besonders dann vorteilhaft, wenn Spezialfahrzeuge abwechselnd von verschiedenen Fahrern benutzt werden, die über keinen eigenen Kodierstecker verfügen, weil ihnen zum Beispiel die Berechtigung, ein beliebiges mobiles Funkgerät zu benutzen, nicht gewährt werden soll. Die zweite Rufnummer des mobilen Funkgerätes ist in diesem Fall in einem gerätebezogenen Speicher für die Selektivrufnummer abgelegt.

Für den Gesprächsaufbau von einer ortsfesten Funkstation zu einer mobilen Funkstation spielt es im allgemeinen keine Rolle, welche der beiden Rufnummern gewählt wird. Ist der Fahrer des Spezialfahrzeuges bekannt und verfügt er über eine eigene Rufnummer, die er mittels seines Kodiersteckers in das mobile Funkgerät eingibt, dann kann er unter dieser Rufnummer gerufen werden. Ist jedoch der Fahrer des Spezialfahrzeuges nicht bekannt, dann kann die mobile Funkstation mittels der gerätebezogenen Rufnummer gerufen werden. Eine andere Situation ergibt sich, wenn in Katastrophenfällen mehrere mobile Funkstationen schnell und sicher erreicht werden müssen. Diese bilden zum Beispiel innerhalb eines Unternehmens Gruppen mit wechselnder Zusammensetzung. In solchen Fällen wird üblicherweise die Funkfrequenz nur für den Katastrophenfall freigehalten. Die Lautsprecher der mobilen Funkstationen werden durch einen Sammelruf oder durch eine Folge von Selektivrufen eingeschaltet. Die Teilnehmer des Funknetzes müssen dann auf den für sie bestimmten verbalen Anruf selbst achten. Wegen der zeitlich wechselnden Zusammensetzung der Gruppen ist eine festgelegte Gruppenrufkodierung, mit der alle Teilnehmer einer Gruppe gleichzeitig erreichbar wären, organisatorisch nur schwer realisierbar. Es ist deshalb vorteilhafter, die mobilen Funkstationen durch Einzelanruf aufzurufen. Sind diese schließlich auf der Katastrophenfrequenz versammelt, müssen die mobilen Funkteilnehmer sorgfältig vermeiden, durch möglicherweise versehentliches Drücken einer sogenannten Schlußruf-oder Löschtaste das eigene mobile Funkgerät in einen Zustand zu versetzen, in welchem der Lautsprecher abgeschaltet ist und Funkdurchsagen demzufolge nicht mehr gehört werden können. Aus diesem Grunde ist es wichtig, zu Beginn von Durchsagen alle zu der betreffenden Gruppe gehörenden Funkteilnehmer einzeln zu rufen, um sicherzustellen, daß bei allen Funkteilnehmern der Lautsprecher eingeschaltet ist. Selbst bei Anwendung einer digitalen Rufsignalisierung, welche wesentlich schneller abläuft als eine Signalisierung auf analoger Basis (Tonfolgeruf), kann der Einzelruf vieler mobiler Funkteilnehmer, der quittierungspflichtig ist, zu untragbar langen Zeiten führen. Man müßte nämlich vor jeder Durchsage jeden mobilen Funkteilnehmer sooft selektiv anrufen, bis er den Anruf quittiert, und dann zum nächsten Teilnehmer übergehen. Dies führt auch zu erheblichen Belästigungen im Funknetz für die bereits gerufenen Teilnehmer, die nämlich die Signalisierung unter Umständen mithören müssen.

**Aufgabe**

Der Erfindung liegt die Aufgabe zugrunde, ein Funknetz nach dem Oberbegriff des Anspruchs 1 derart weiterzubilden, daß eine bestimmte Gruppe von Funkteilnehmern im Katastrophenfall auch dann mit Sicherheit und unverzögert von einer ortsfesten Funkstation gerufen werden kann, wenn sich die Zusammensetzung der Gruppe im Laufe der Zeit, zum Beispiel eines Tages, mehrfach ändert.

**Lösung und erzielbare Vorteile**

Diese Aufgabe wird bei einem Funknetz nach dem Oberbegriff des Anspruchs 1 durch die im kennzeichnenden Teil angegebenen Merkmale dieses Anspruchs gelöst. Die mit der Erfindung erzielbaren Vorteile bestehen insbesondere darin, daß eine bestimmte Gruppe von im Laufe der Zeit wechselnden Funkteilnehmern im Katastrophenfall von einer ortsfesten Funkstation so schnell und sicher wie möglich gerufen werden kann.

Ein bevorzugtes Anwendungsgebiet für die Erfindung sind Sprechfunknetze mit mobilen Funkteilnehmern.

## Beschreibung

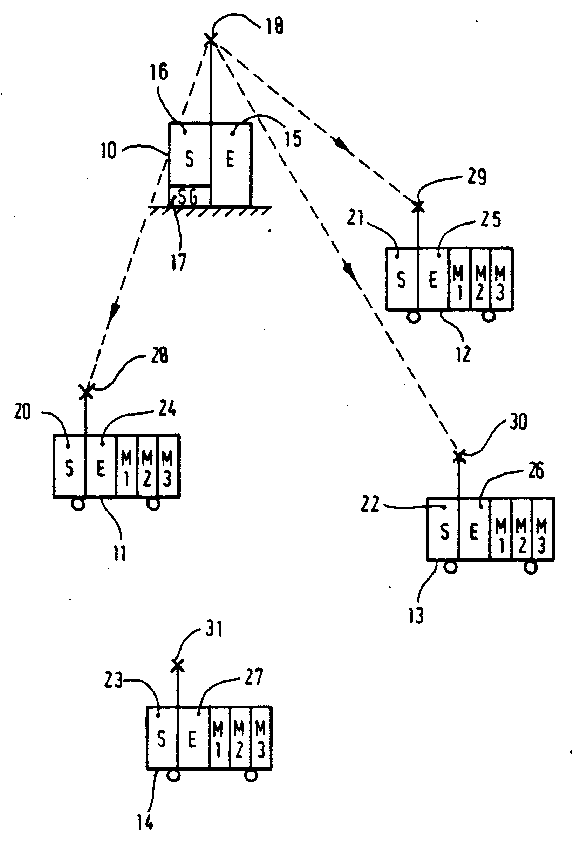

Ein Ausführungsbeispiel der Erfindung ist in der Zeichnung dargestellt und wird im folgenden näher beschrieben.

Die einzige Figur zeigt ein Blockschaltbild eines Funknetzes mit einer ortsfesten Funkstation, im folgenden Funkleitstelle 10 genannt, und mehreren mobilen Funkstationen 11, 12, 13 und 14. Die Funkleitstelle 10 umfaßt ein Empfangsteil 15 und ein Sendeteil 16, zu dem ein digitaler Selektivrufgeber 17 gehört. Dem Sendeteil und dem Empfangsteil ist eine Sende-Empfangsantenne 18 zugeordnet.

Die mobilen Funkstationen 11 bis 14 weisen je ein Sendeteil 20, 21, 22 und 23, je ein Empfangsteil 24, 25, 26 und 27 auf. Den Sende- und Empfangsteilen ist je eine Sende-Empfangsantenne 28, 29, 30, 31 zugeordnet.

Die mobilen Funkstationen sind mikroprozessorgesteuert und enthalten neben einem ersten Adressenspeicher M1 für eine, zum Beispiel durch einen Kodierstecker individuell festlegbare Selektivrufnummer, einen zweiten Adressenspeicher M2 für eine gerätebezogene Selektivrufnummer und einen zusätzlichen dritten Adressenspeicher M3 für eine temporäre Gruppen-Funkrufnummer. Die Funkleitstelle 10 enthält einen Selektivruf-und Gruppenrufgeber 17, mit dem wahlweise verschiedene Selektiv- und Gruppenrufsignale bereitgestellt werden können.

Das vorstehend beschriebene Funknetz erfüllt folgende Funktionen.

Im normalen Funkverkehr kann von der Funkleitstelle 10 aus jede mobile Funkstation 11 ... 14 selektiv gerufen werden, indem der Selektivruf-und Gruppenrufgeber 17 entweder auf die einem Funkteilnehmer individuell zugeordnete Selektivrufnummer oder auf einen der mobilen Funkstation zugeordneten Selektivruf eingestellt und der Selektivruf als Selektivrufsignal über die Sende-Empfangsantenne 18 ausgestrahlt wird. Alle mobilen Funkstationen 11 ... 14 im Sendebereich der Funkleitstelle 10 empfangen den Selektivruf, und nur der Adressenspeicher M1 oder M2 der gerufenen mobilen Funkstation spricht an und schaltet den zu der betreffenden mobilen Funkstation gehörenden Lautsprecher ein, so daß von der Funkleitstelle aus eine Nachricht für die betreffende mobile Funkstation durchgegeben werden kann.

Bilden nun beispielsweise bestimmte mobile Funkstationen, zum Beispiel 11, 12 und 13, eine Gruppe, die im Katastrophenfall von der Funkleitstelle 10 aus angerufen werden soll, so erhalten diese mobilen Funkstationen von der Funkleitstelle eine gemeinsame Gruppen-Funkrufnummer zugeteilt. Zu diesem Zweck ruft die Funkleitstelle die zu der Gruppe gehörenden mobilen Funkstationen nacheinander durch ein erstes Datentelegramm selektiv auf und teilt ihnen durch ein Folgetelegramm, das ist ein zweites, unmittelbar folgendes Datentelegramm, die gemeinsame Gruppen-Funkrufnummer mit. Diese gesamte Übertragung ist quittierungspflichtig. Die Gruppen-Funkrufnummer wird in den einzelnen, an der Gruppe beteiligten mobilen Funkstationen in dem dritten Adressenspeicher M3 temporär gespeichert. Diese Funkrufnummer erhält in der mobilen Funkstation den Status einer Sammel- oder Gruppenrufnummer; das bedeutet, daß ein Funkanruf nicht durch eine Quittung beantwortet werden muß. Aus Gründen der sicheren Zustellung wird die temporäre Gruppen-Funkrufnummer vor jedem Gesprächsaufbau vorteilhafterweise mehrmals übertragen. Die Anzahl der aufeinanderfolgenden Gruppen-Funkrufnummer-Aussendungen ist abhängig von der Qualität der Funkfeldversorgung und wird deshalb in der Funkleitstelle bei Einrichtung des Funknetzes festgelegt.

Tritt ein Katastrophenfall ein, so sendet die Funkleitstelle 10 vor jeder Durchsage die temporäre Gruppen-Funkrufnummer für die Fahrzeuggruppe, gegebenenfalls mehrfach, aus. Dadurch ist sichergestellt, daß die Lautsprecher aller mobilen Funkstationen eingeschaltet sind und die folgende Durchsage wiedergeben können.

Auf eine zeitaufwendige Quittierung des digital übertragenen Gruppen-Funkrufs durch die gerufenen mobilen Funkstationen kann ohne eine Verringerung der Zustellwahrscheinlichkeit verzichtet werden, indem, wie bereits weiter oben erwähnt, eine Gruppen-Funkrufnummer von der Funkleitstelle zwei- oder mehrfach ausgesendet wird.

In der Praxis können in den mobilen Funkstationen auch mehrere temporäre Gruppen-Funkrufnummern abgelegt werden.

In ähnlicher Weise, wie die temporären Gruppen-Funkrufnummern von einer Funkleitstelle vergeben werden, können diese auch von dieser Leitstelle wieder gelöscht werden. Dies erfolgt vorzugsweise durch einen Anruf der Gruppe mit einem zusätzlichen Löschmerkmal innerhalb des Gruppenruf-Telegramms.

Eine alternative Art des Löschens erfolgt bei Systemen mit mehreren, durch Überschreiben löschbaren temporären Speichern dadurch, daß in dem Zustellungstelegramm die Adresse des betref-

fenden Speicherplatzes enthalten ist.

**Ansprüche**

1. Funknetz mit mindestens einer ortsfesten Funkstation und mehreren mobilen Funkstationen, deren durch eine Mikroprozessorschaltung gesteuerte Funkgeräte durch eine digitale, selektive Rufnummer von der ortsfesten Funkstation anrufbar sind, **dadurch gekennzeichnet,** daß die Mikroprozessorschaltung einen freien Speicherplatz (M3) kontrolliert, in welchen die ortsfeste Funkstation (10) eine einer Gruppe von mobilen Funkstationen (11, 12) gemeinsame, nicht quittierungspflichtige Adresse lädt, indem sie diese mobilen Funkstationen selektiv anruft und in einem folgenden Datentelegramm die besagte Adresse mitteilt, wobei die gesamte Übertragung von jeder angerufenen mobilen Funkstation quittiert werden muß.

2. Funknetz nach Anspruch 1, dadurch gekennzeichnet, daß die ladbare Adresse eine Gruppen-Funkrufnummer ist und daß die Verweildauer in dem Speicherplatz (M3) temporär ist.

3. Funknetz nach Anspruch 1 oder 2, dadurch gekennzeichnet, daß die ortsfeste Funkstation (10) vor jeder Durchsage oder vor jeder Nachrichtenübermittlung im Katastrophenfall die temporäre Gruppen-Funkrufnummer zwei- oder gegebenenfalls mehrfach aussendet.

4. Funknetz nach einem der Ansprüche 1 bis 3, dadurch gekennzeichnet, daß der Speicherinhalt des freien Speicherplatzes (M3) durch die ortsfeste Funkstation (10) löschbar ist.

5. Funknetz nach einem der Ansprüche 1 bis 4, dadurch gekennzeichnet, daß die ortsfeste Funkstation (10) verschiedenen Gruppen von mobilen Funkstationen verschiedene Gruppen-Funkrufnummern zuordnet und den betreffenden mobilen Funkstationen jeder Gruppe zwecks Speicherung in dem freien Speicherplatz (M3) übermittelt.

6. Funknetz nach Anspruch 4, dadurch gekennzeichnet, daß die zu löschenden Speicherplätze (M3) der Gruppe durch ein gegebenenfalls mehrfach ausgesendetes Gruppen-Funkruf-Telegramm aufgerufen werden, das einen Löschbefehl enthält.

7. Funknetz nach Anspruch 4, dadurch gekennzeichnet, daß die zu löschenden Speicherplätze (M3) der Gruppe durch eine neue temporäre Gruppenrufnummer überschrieben werden.

8. Funknetz nach Anspruch 7, dadurch gekennzeichnet, daß bei Systemen mit mehrere temporäre Speicher aufweisenden mobilen Funkstationen im Falle des Überschreibens einer temporären Gruppenrufnummer die Adresse des Speicherplatzes im Zustellungstelegramm enthalten ist.